# EUROPÄISCHE PATENTSCHRIFT

(11) **EP 2 517 351 B1**
(45) Veröffentlichungstag und Bekanntmachung des Hinweises auf die Patenterteilung: **25.02.2015**
(21) Anmeldenummer: 10792886.3
(22) Anmeldetag: 10.12.2010
(51) Int. Cl.: H02P 25/14, H02P 29/02, B25D 11/00, H02H 7/08

(54) **NETZTRENNUNG MIT SCHALTERN FÜR ELEKTROWERKZEUGE**
DISCONNECTION FROM MAINS USING SWITCHES FOR POWER TOOLS
SÉPARATION DU RÉSEAU ÉLECTRIQUE AVEC COMMUTATEURS POUR OUTILS ÉLECTRIQUES

(30) Priorität: 21.12.2009 DE 102009059884
(43) Veröffentlichungstag der Anmeldung: 31.10.2012
(73) Patentinhaber: Robert Bosch GmbH, 70442 Stuttgart (DE)
(72) Erfinder: ROTTMERHUSEN, Hans, Hermann, 25782 Tellingstedt (DE)
(86) Internationale Anmeldenummer: PCT/EP2010/069331
(87) Internationale Veröffentlichungsnummer: WO 2011/085882

(56) Entgegenhaltungen:
- WO-A1-2005/101606
- DE-A1- 3 440 920
- DE-A1- 19 733 533
- DE-C1- 4 021 559
- US-A- 4 400 657

## Beschreibung

Die Erfindung bezieht sich auf ein Verfahren zum Betreiben eines netzbetriebenen Elektromotors für ein Elektrowerkzeug mit Schaltern und deren Überwachung auf Betriebssicherheit gemäß Patentanspruch 1.

### Stand der Technik

Netzbetriebene Elektrowerkzeuge beinhalten meistens einen Universalmotor, und werden in der Regel durch einen mechanischen Schalter mit einem Netz verbunden oder getrennt.

### Offenbarung der Erfindung

Der Erfindung liegt die Aufgabe zugrunde, einen Elektromotor mit elektronischen Schaltern mit einem Netz zu verbinden und zu trennen, und eine Überwachung der elektronischen Schalter auf ihre Betriebssicherheit vorzusehen, damit bei einer Netztrennung mit Schaltern eine hohe Betriebssicherheit bei Elektrowerkzeugen gewährleistet ist

DE 197 33 533 A1 zeigt eine Überwachungsschaltung eines Elektromotors, insbesondere zum Antrieb einer Wäschetrommel einer Waschmaschine. Zur Erkennung eines schaltungstechnischen Fehlerzustands wird vorgeschlagen, parallel zur Reihenschaltung des Elektromotors und eines Schalters einen Parallelwiderstand vorzusehen, der in Reihe zu einem elektronischen Schaltelement für den Motor gelegt ist. Aus Spannungen des Parallelwiderstands wird auf einen Normalfall oder einen Fehlerfall geschlossen.

DE 40 21 559 C1 zeigt ein elektrisches Werkzeug mit Motorantrieb.

WO 2005/101606 A1 zeigt einen Reihenschlussmotor und ein Verfahren zur Steuerung des Reihenschlussmotors.

Die Aufgabe wird durch Patentanspruch 1 gelöst. Weitere Ausgestattungen der Erfindung sind in den Unteransprüchen und der Beschreibung dargelegt.

Die Vorteile der Erfindung werden darin gesehen, daß für ein netzbetriebenes Elektrowerkzeug eine beidseitige Netztrennung mit Schaltern erfolgt, und die Schalter auf ihre Betriebssicherheit speziell überwacht werden.

Durch die vorgeschlagenen Verfahren können die Schalter sowohl einzeln als auch in Kombination einfach überprüft und deren Funktionsweise sicher gestellt werden.

Die Erfindung wird nachstehend anhand der Zeichnung näher erläutert.

Dabei zeigt:

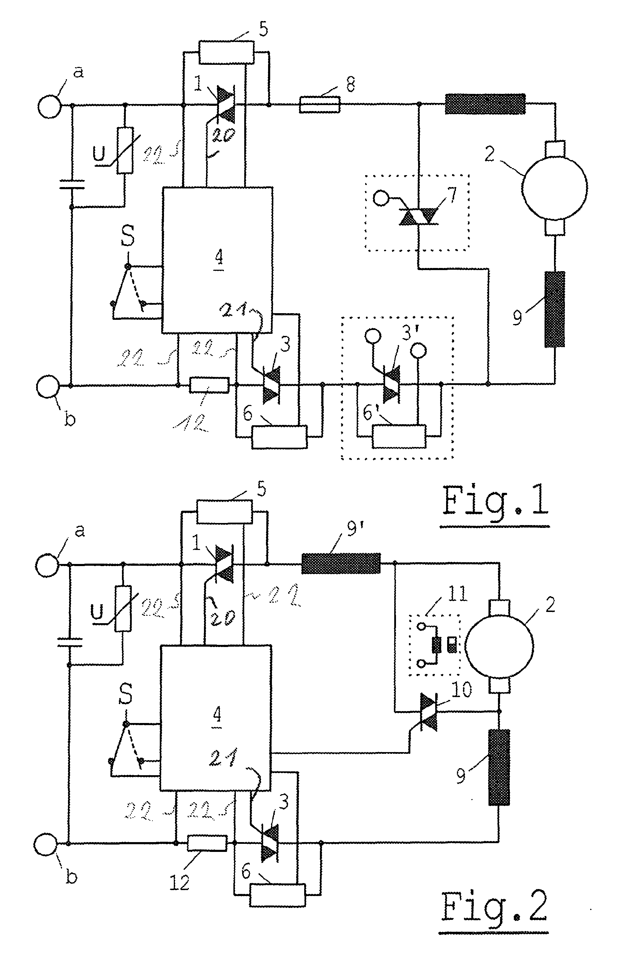

Fig. 1 bis 4 Schaltungsanordnungen für netzbetriebene Elektrowerkzeuge mit einer beidseitigen Netztrennung durch elektronische Schalter.

Bei einigen Elektrowerkzeugen ist es erforderlich, dass der Elektromotor in der Ausschaltstellung gegen Erde abgesichert ist, daher ist es notwenig in jedem Netzanschluss des Elektrowerkzeugs einen elektronischen Schalter anzuordnen.

Fig. 1 zeigt eine solche Schaltungsanordnung, bei der ein erster Triac 1 in einem ersten Netzanschluss a des Universalmotors 2 angeordnet ist, und in einem zweiten Netzanschluss b des Universalmotors ist ein zweiter Triac 3 angeordnet. Den Triacs 1,3 (Halbleiterschalter) ist eine Steuerelektronik 4 zugeordnet. Anstelle von Triacs als Halbleiterschalter können auch andere Arten von elektronischen Schaltern, insbesondere Halbleiterschalter verwendet werden.

Da kein mechanisches Netztrennschaltglied vorgesehen ist, werden die Triacs 1,3 speziell auf ihre Betriebssicherheit überwacht. Für die Betriebssicherheitsüberwachung ist den Triacs 1,3 hier beispielsweise jeweils eine Stromkontrolleinrichtung 5,6 zugeordnet, wobei dem ersten Triac 1 eine erste Stromkontrolleinrichtung 5, und dem zweiten Triac 3 eine zweite Stromkontrolleinrichtung 6 parallel geschaltet ist.

Die Stromkontrolleinrichtungen sind zur Überwachung der Triacs 1,3 mit der Steuerelektronik 4 verbunden, und die Steuerelektronik 4 beinhaltet beispielsweise einen Mikrocontroller und ist mit einem Speicher verbunden. Die Steuerelektronik ist über Signalleitungen 22 mit dem ersten Netzanschluss a vor dem ersten Triac 1 und mit dem zweiten Netzanschluss b vor dem Shunt 12 und nach dem Shunt 12 verbunden.

Im Speicher sind Vergleichswerte für Parameter, insbesondere Betriebsparameter des Elektromotors wie z.B. Stromverbrauch, Spannung auf den zwei Anschlüssen des Elektromotors und die Drehzahl des Elektromotors abhängig von verschiedenen Schaltsituationen der Halbleiterschalter abgelegt. Somit sind beispielsweise Vergleichswerte für den Strom, die Spannung an den Anschlüssen des Elektromotors und die Drehzahl für die erste Schaltsituation erster und zweiter Schalter leitend, für die zweite Schaltsituation erste Schalter leitend und zweiter Schalter sperrend, für die dritte Schaltsituation erster Schalter sperrend und zweiter Schalter leitend und für die vierte Schaltsituation erster und zweiter Schalter sperrend abgelegt.

Die Stromkontrolleinrichtungen werden vom Mikrocontroller abgefragt. Die Abfrage kann erfolgen, wenn beispielsweise ein Elektrowerkzeug an ein Netz angeschlossen ist und während des Motorbetriebes in einer Zeit einer jeweiligen Halbwelle des Netzes, bei der die Halbleiterschalter nicht angesteuert sind.

Die Überwachung der Triacs 1,3 auf ihre Funktion erfolgt beispielsweise folgendermaßen: wird beispielsweise ein Elektrowerkzeug an ein Netz angeschlossen oder ist das Elektrowerkzeug bereits an ein Netz angeschlossen, so fragt der Mikrocontroller zuerst die Stromkontrolleinrichtungen 5,6 ab, ob ein vorgegebener Strom über die Stromkontrolleinrichtungen 5,6 fließt. Erfüllt der erste und der zweite Triac 1,3 voll seine Sperrfunktion, so fließt über die erste und über die zweite Stromkontrolleinrichtung 5,6 und über den Universalmotor 2 der vorgegebene Strom. Ist der erste Triac 1 leitend, so fließt über die erste Stromkontrolleinrichtung 5 kein Strom. In einem solchen Fall wird der zweite Triac gesperrt, und die Steuerelektronik 4 schaltet auf Störung. Ist der zweite Triac 3 leitend, so fließt über die zweite Stromkontrolleinrichtung 6 kein Strom. In diesem Fall wird der erste Triac 1 gesperrt, und die Steuerelektronik 4 schaltet auf Störung.

Ist sowohl der erste als auch der zweite Triac 1,3 leitend, das heißt durchlegiert und sie haben einen internen Kurzschluss, so fließt über die erste und über die zweite Stromkontrolleinrichtung 5,6 kein Strom. In einem solchen Fall kann eine Schutzschaltung vorgesehen sein, indem das Netz mit einem weiteren Halbleiterschalter 7 kurzgeschlossen, und eine Sicherung 8 ausgelöst wird. Eine Störung kann optisch angezeigt sein.

Für eine zusätzliche Sicherheit können in dem ersten oder in dem zweiten Netzanschluss, als auch in beiden Netzanschlüssen a,b mehrere elektronische Schalter in Reihe geschaltet sein, wobei jedem Schalter eine Stromkontrolleinrichtung parallel geschaltet ist. Die Funktion der Sicherheitsüberprüfung der Halbleiterschalter entspricht die der zuvor beschriebenen. Für die Inbetriebnahme des Elektrowerkzeugs ist der Steuerelektronik 4 ein Schaltglied S zugeordnet, und dieses Schaltglied besitzt für eine sichere Erkennung der Schaltstellung drei Anschlüsse. Die zuvor beschriebene Stromkontrolleinrichtung 5,6 für elektronische Schalter 1,3 kommt auch bei einer Schaltungsanordnung zur Anwendung, wenn ein mechanischer Netztrennschalter angeordnet ist.

Es kann für bestimmte Motorsteuerungen auch ein Halbleiterschalter dem Anker 2 oder eine Feldwicklung 9 parallel geschaltet sein.

Fig. 2 zeigt eine solche Schaltungsanordnung bei der ein Halbleiterschalter 10 dem Anker des Elektromotors 2 parallel geschaltet ist.

Ein solcher Halbleiterschalter 10 läßt sich mit einer Drehzahlerkennungseinrichtung 11 gut überwachen. Wird über die Steuerelektronik 4 ein Motorbetrieb aktiviert, und die Drehzahlauswertung stellt keine Drehzahl des Motors fest, so ist voraussichtlich der zum Anker parallel geschaltete Halbleiterschalter 10 defekt. Zusätzlich kann dieser Halbleiterschalter 10 noch über einen Shunt 12 überwacht werden. Wird ein vorgegebener Höchststrom überschritten, so werden die geschalteten Halbleiterschalter 1,3 in den Netzanschlüssen a,b umgehend gesperrt, und die Steuerelektronik 4 schaltet auf Störung.

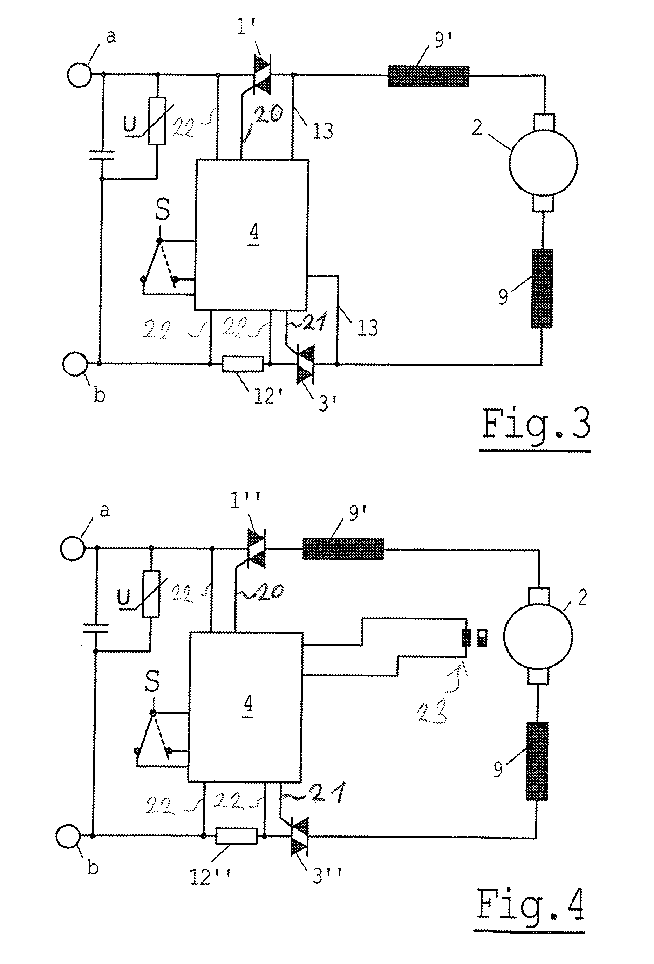

Fig. 3 zeigt eine alternative Überwachung der Halbleiterschalter 1',3'. Vom Motoranschluss zu den Halbleiterschaltern 1',3' führt jeweils ein Kontrollanschluss 13 zu der Steuerelektronik 4. Liegt während einer Überprüfung der Halbleiterschalter eine Spannung an einem der Kontrollanschlüsse 13 an, so schaltet die Steuerelektronik 4 auf Störung. Die Halbleiterschalter können auch über einen Shunt 12' überwacht werden. Wird bei einer Überwachung der Halbleiterschalter ein vorgegebener Höchststrom überschritten, indem das Netz mit dem ersten Halbleiterschalter 1' voll angesteuert, und mit dem zweiten Halbleiterschalter 3' schwach angesteuert wird, so ist der zweite Halbleiterschalter defekt, und wird das Netz mit dem zweiten Halbleiterschalter 3 voll, und mit dem ersten Halbleiterschalter 1 schwach angesteuert, so ist der erste Halbleiterschalter defekt, wenn der vorgegebene Höchststrom überschritten ist.

In beiden Fällen schaltet die Steuerelektronik auf Störung.

Fig. 4 zeigt eine Schaltungsanordnung, mit der eine Überwachung der Halbleiterschalter in den Netzanschlüssen a,b über einen Shunt 12" und über eine Drehzahlauswertung über einen Drehzahlsensor 23 erfolgt. Der Drehzahlsensor 23 ist dem Universalmotor 2 zugeordnet und über weitere Signalleitungen mit der Steuerelektronik 4 verbunden. Bei der Überprüfung der Schaltsicherheit der Halbleiterschalter 1", 3" wird der erste Halbleiterschalter 1" für einen schwachen Stromfluss angesteuert. Wird eine Drehzahl erkannt, so ist der zweite Halbleiterschalter 3" defekt, und die Steuerelektronik 4 schaltet auf Störung. Ist der zweite Halbleiterschalter in Ordnung, so wird der zweite Halbleiterschalter für einen schwachen Stromfluss angesteuert, wird eine Drehzahl erkannt, so ist der erste Halbleiterschalter defekt und die Steuerelektronik 4 schaltet auf Störung.

Mit den beschriebenen Ausführungsformen können folgende Verfahren durchgeführt werden:
Der netzbetriebene Elektromotor 2 für ein Elektrowerkzeug weist Schalter, insbesondere Halbleiterschaltern 1,3 auf, deren Funktionsweise auf Betriebssicherheit mit der Steuerelektronik 4 überwacht wird. Dabei ist in jedem Netzanschluss a,b zum Elektromotor ein Schalter 1,3 angeordnet. Die Schalter sind mit der Steuerelektronik über Steuerleitungen 20,21 verbunden. In einem ersten Schritt wird von der Steuerelektronik 4 der erste Schalter 1 leitend und der zweite Schalter 2 sperrend geschalten werden. Anschließend wird von der Steuerelektronik ein Betriebsparameter des Elektromotors 2 erfasst und mit einem vorgegebenen Wert verglichen. Es wird eine Fehlfunktion der Schalter 1,3 von der Steuerelektronik 4 erkannt, wenn der erfasste Betriebsparameter von dem vorgegebenen Wert abweicht. In einem zweiten Schritt wird von der Steuerelektronik 4 der erste Schalter 1 sperrend und der zweite Schalter 3 leitend geschalten. Anschließend wird ein Betriebsparameter des Elektromotors von der Steuerelektronik erfasst und mit einem vorgegebenen Wert verglichen. Von der Steuerelektronik 4 wird eine Fehlfunktion der Schalter 1,3 erkannt wird, wenn der erfasste Betriebsparameter von dem vorgegebenen Wert abweicht. Der oder die vorgegebenen Werte sind in einem Speicher abgelegt, der mit der Steuerelektronik verbunden ist.

In einer weiteren Ausführungsform ist jedem Schalter eine Stromkontrolleinrichtung 5,6 parallel geschaltet und zur Überwachung der Schalter 1,3 und zur Erfassung des Betriebsparameters sind die Stromkontrolleinrichtungen 5,6 mit der Steuerelektronik 4 verbunden.

In einer weiteren Ausführungsform schaltet die Steuerelektronik 4 auf Störung, wenn bei einer Überwachungskontrolle der Schalter 1,3 der erfasste Betriebsparameter nicht mit einem vorgegebenen, abgespeicherten Wert übereinstimmt.

In einer weiteren Ausführungsform ist von Motoranschlüssen an den Schaltern 1',3' jeweils ein Kontrollanschluss 13 zu der Steuerelektronik 4 geführt, wobei über den Kontrollanschluss ein Betriebsparameter erfasst wird, wobei insbesondere während einer Überprüfung der Schalter 1',3', bei der die Schalter leitend geschalten sind, die Steuerelektronik 4 auf Störung schaltet, wenn eine Spannung an einem der Kontrollanschlüsse 13 liegt.

In einer weiteren Ausführungsform wird als Betriebsparameter eine Spannung, eine Drehzahl oder ein Stromfluss von der Steuerelektronik 4 erfasst.

In einer weiteren Ausführungsform die Überwachung der Schalter 1",3" in Netzanschlüssen a,b über einen Shunt 12", und/oder über eine Drehzahlauswertung des Elektromotors 2, wobei während einer Überprüfung der Schalter 1",3" die Steuerelektronik 4 auf Störung schaltet, wenn die erfasste Drehzahl und/oder der erfasste Stromfluss von dem vorgegebenen Wert abweicht.

In einer weiteren Ausführungsform erfolgt eine Abfrage für eine Überwachung der Schalter 1,3, wenn ein Elektrowerkzeug an ein Netz gelegt ist, oder während eines Motorbetriebes in einer Zeit einer jeweiligen Halbwelle eines Netzes, bei der die Schalter nicht angesteuert sind.

In einer weiteren Ausführungsform wird eine Schutzschaltung aktiviert und ein weiterer Schalter 7 von der Steuerelektronik 4 angesteuert, wenn sowohl der erste Schalter 1 als auch der zweite Schalter 3 defekt sind.

In einer weiteren Ausführungsform sind in einem ersten oder in einem zweiten als auch in beiden Netzanschlüssen a,b mehrere Schalter in Reihe geschaltet.

In einer weiteren Ausführungsform ist einem Anker des Elektromotors 2 ein Schalter 10 parallel geschaltet und eine Überwachung des Schalters 10 erfolgt über eine Drehzahlerkennungseinrichtung 11 und/oder über einen Shunt 12.

In einer weiteren Ausführungsform werden die Schalter 1',3' zusätzlich über einen Shunt 12' überwacht und bei einer Überschreitung eines vorgegebenen Höchststroms schaltet die Steuerelektronik 4 auf Störung.

In einer weiteren Ausführungsform wird die Funktionsfähigkeit der Halbleiterschalter des netzbetriebenen Elektromotors für ein Elektrowerkzeug auf Betriebssicherheit mit einer Steuerelektronik (4) mit Mikrokontroller überwacht,
- wobei in jedem Netzanschluss a,b des Elektromotors ein Halbleiterschalter 1,3 angeordnet ist, und den Halbleiterschaltern eine Steuerelektronik 4 zugeordnet ist,
- wobei die Halbleiterschalter 1,3 speziell überwacht sind, wozu jedem Halbleiterschalter eine Stromkontrolleinrichtung 5,6 parallel geschaltet ist,
- und zur Überwachung der Halbleiterschalter 1,3 die Stromkontrolleinrichtungen 5,6 mit der Steuerelektronik 4 verbunden sind,
- und die Steuerelektronik 4 auf Störung schaltet, wenn bei einer Überwachungskontrolle der Halbleiterschalter 1,3 kein Strom über eine Stromkontrolleinrichtung der Stromkontrolleinrichtungen 5,6 fließt.

In einer weiteren Ausführung wird bei einem netzbetriebenen Elektromotor für ein Elektrowerkzeug mit Halbleiterschaltern 1',3' eine Überwachung auf Betriebssicherheit mit einer Steuerelektronik 4 mit Mikrokontroller durchgeführt,
- wobei von Motoranschlüssen an den Halbleiterschaltern 1',3' jeweils ein Kontrollanschluss 13 zu der Steuerelektronik 4 führt,
- und während einer Überprüfung der Halbleiterschalter 1',3' die Steuerelektronik 4 sofort auf Störung schaltet, wenn eine Spannung an einem der Kontrollanschlüsse 13 liegt.

In einer weiteren Ausführungsform wird bei einem netzbetriebenen Elektromotor für ein Elektrowerkzeug mit Halbleiterschaltern 1",3" eine Überwachung auf Betriebssicherheit mit einer Steuerelektronik 4 mit Mikrokontroller durchgeführt,
- wobei die Überwachung der Halbleiterschalter 1",3" in Netzanschlüssen a,b über einen Shunt 12", und/oder über eine Drehzahlauswertung erfolgt,
- und während einer Überprüfung der Halbleiterschalter 1",3" die Steuerelektronik 4 auf Störung schaltet, wenn eine Drehzahl erkannt, und/oder ein zu hoher Stromfluss ermittelt ist.

In einer weiteren Ausführungsform werden die Halbleiterschalter überwacht, wobei eine Abfrage für eine Überwachung der Halbleiterschalter 1,3 erfolgt, wenn ein Elektrowerkzeug an ein Netz gelegt ist, oder während eines Motorbetriebes in einer Zeit einer jeweiligen Halbwelle eines Netzes, bei der die Halbleiterschalter nicht angesteuert sind.

In einer weiteren Ausführungsform werden die Halbleiterschalter überwacht, wobei eine Schutzschaltung aktiviert, und ein weiterer Halbleiterschalter 7 von der Steuerelektronik 4 angesteuert ist, wenn sowohl der erste Halbleiterschalter 1 als auch der zweite Halbleiterschalter 3 defekt ist.

In einer weiteren Ausführungsform werden die Halbleiterschalter überwacht, wobei in einem ersten oder in einem zweiten als auch in beiden Netzanschlüssen a,b mehrere Halbleiterschalter in Reihe geschaltet sind.

In einer weiteren Ausführungsform werden die Halbleiterschalter überwacht, wobei einem Anker des Elektromotors 2 ein Halbleiterschalter 10 parallel geschaltet ist, und eine Überwachung des Halbleiterschalters 10 über eine Drehzahlerkennungseinrichtung 11 und/oder über einen Shunt 12 erfolgt.

In einer weiteren Ausführungsform werden die Halbleiterschalter überwacht, wobei die Halbleiterschalter 1',3' zusätzlich über einen Shunt 12' überwacht sind, und bei einer Überschreitung eines vorgegebenen Höchststroms die Steuerelektronik 4 auf Störung schaltet.

## Patentansprüche

1. Verfahren zum Betreiben eines netzbetriebenen Elektromotors (2) für ein Elektrowerkzeug mit Schaltern, insbesondere Halbleiterschaltern (1,3), wobei die Funktionsweise der Schalter auf Betriebssicherheit mit einer Steuerelektronik (4) überwacht wird,
- wobei in jedem Netzanschluss (a,b) zum Elektromotor ein Schalter (1,3) angeordnet ist,
- wobei die Schalter (1,3) mit der Steuerelektronik (4) über Steuerleitungen (20,21) verbunden sind,
- wobei in einem ersten Schritt von der Steuerelektronik (4) der erste Schalter (1) leitend und der zweite Schalter (2) sperrend geschalten werden, wobei anschließend ein Betriebsparameter des Elektromotors (2) erfasst wird und mit einem vorgegebenen Wert verglichen wird, wobei eine Fehlfunktion der Schalter (1,3) von der Steuerelektronik (4) erkannt wird, wenn der erfasste Betriebsparameter von dem vorgegebenen Wert abweicht,
**dadurch gekennzeichnet, dass** in einem zweiten Schritt von der Steuerelektronik (4) der erste Schalter (1) sperrend und der zweite Schalter (3) leitend geschalten werden, wobei anschließend ein Betriebsparameter des Elektromotors (2) erfasst wird und mit einem vorgegebenen Wert verglichen wird, wobei von der Steuerelektronik (4) eine Fehlfunktion der Schalter (1,3) erkannt wird, wenn der erfasste Betriebsparameter von dem vorgegebenen Wert abweicht; und
jedem Schalter eine Stromkontrolleinrichtung (5,6) parallel geschaltet ist, und zur Überwachung der Schalter (1,3) und zur Erfassung des Betriebsparameters die Stromkontrolleinrichtungen (5,6) mit der Steuerelektronik (4) verbunden sind.

2. Verfahren nach Anspruch 1, wobei die Steuerelektronik (4) auf Störung schaltet, wenn bei einer Überwachungskontrolle der Schalter (1,3) der erfasste Betriebsparameter nicht mit einem vorgegebenen Wert übereinstimmt.

3. Verfahren nach einem der Ansprüche 1 oder 2, wobei von Motoranschlüssen an den Schaltern (1',3') jeweils ein Kontrollanschluss (13) zu der Steuerelektronik (4) führt, wobei über den Kontrollanschluss ein Betriebsparameter erfasst wird, wobei insbesondere während einer Überprüfung der Schalter (1',3'), bei der die Schalter leitend geschalten sind, die Steuerelektronik (4) auf Störung schaltet, wenn eine Spannung an einem der Kontrollanschlüsse (13) liegt.

4. Verfahren nach einem der Ansprüche 1 bis 3,
wobei als Betriebsparameter eine Spannung, eine Drehzahl oder ein Stromfluss von der Steuerelektronik (4) erfasst wird.

5. Verfahren nach einem der Ansprüche 1 bis 4, wobei die Überwachung der Schalter (1",3") in Netzanschlüssen (a,b) über einen Shunt (12"), und/oder über eine Drehzahlauswertung des Elektromotors (2) erfolgt,
- und während einer Überprüfung der Schalter (1",3") die Steuerelektronik (4) auf Störung schaltet, wenn die erfasste Drehzahl und/oder der erfasste Stromfluss von dem vorgegebenen Wert abweicht.

6. Verfahren nach einem der Ansprüche 1 bis 5,
wobei eine Abfrage für eine Überwachung der Schalter (1,3) erfolgt, wenn ein Elektrowerkzeug an ein Netz gelegt ist, oder während eines Motorbetriebes in einer Zeit einer jeweiligen Halbwelle eines Netzes, bei der die Schalter nicht angesteuert sind.

7. Verfahren nach einem der Ansprüche 1 bis 6,
wobei eine Schutzschaltung aktiviert, und ein weiterer Schalter (7) von der Steuerelektronik (4) angesteuert ist, wenn sowohl der erste Schalter (1) als auch der zweite Schalter (3) defekt ist.

8. Verfahren nach einem der Ansprüche 1 bis 7,
**dadurch gekennzeichnet, dass** in einem ersten oder in einem zweiten als auch in beiden Netzanschlüssen (a,b) mehrere Schalter in Reihe geschaltet sind.

9. Verfahren nach einem der Ansprüche 1 bis 8,
**dadurch gekennzeichnet, dass** einem Anker des Elektromotors (2) ein Schalter (10) parallel geschaltet ist, und eine Überwachung des Schalters (10) über eine Drehzahlerkennungseinrichtung (11) und/oder über einen Shunt (12) erfolgt.

10. Verfahren nach einem der Ansprüche 1 bis 9,
**dadurch gekennzeichnet, dass** die Schalter (1',3') zusätzlich über einen Shunt (12') überwacht sind, und bei einer Überschreitung eines vorgegebenen Höchststroms die Steuerelektronik (4) auf Störung schaltet.

## Claims

1. Method for operating a mains-operated electric motor (2) for a power tool with switches, in particular semiconductor switches (1, 3), wherein the method of functioning of the switches is monitored for operational reliability with an electronic controller (4),
- wherein a switch (1, 3) is arranged in each mains connection (a, b) to the electric motor,
- wherein the switches (1, 3) are connected to the electronic controller (4) by means of control lines (20, 21),
- wherein in a first step the first switch (1) is activated and the second switch (2) is deactivated by the electronic controller (4), wherein an operating parameter of the electric motor (2) is subsequently detected and is compared with a predefined value, wherein a malfunction of the switches (1, 3) is detected by the electronic controller (4) if the detected operating parameter deviates from the predefined value,
**characterized in that** in a second step the first switch (1) is deactivated and the second switch (3) is activated by the electronic controller (4), wherein an operating parameter of the electric motor (2) is subsequently detected and is compared with a predefined value, wherein a malfunction of the switches (1, 3) is detected by the electronic controller (4) if the detected operating parameter deviates from the predefined value, and
a current monitoring device (5, 6) is connected in parallel with each switch, and the current monitoring devices (5, 6) are connected to the electronic controller (4) for the purpose of monitoring the switches (1, 3) and for detecting the operating parameter.

2. Method according to Claim 1, wherein the electronic controller (4) switches to fault if, during a monitoring check of the switches (1, 3), the detected operating parameter does not correspond to a predefined value.

3. Method according to one of Claims 1 and 2, wherein in each case a monitoring connection (13) leads to the electronic controller (4) from motor connections at the switches (1', 3'), wherein an operating parameter is detected by means of the monitoring connection, wherein, in particular during checking of the switches (1', 3') during which the switches are activated, the electronic controller (4) is switched to fault if a voltage is present at one of the monitoring connections (13).

4. Method according to one of Claims 1 to 3, wherein a voltage, a rotational speed or a flow of current is detected as an operating parameter by the electronic controller (4).

5. Method according to one of Claims 1 to 4, wherein the switches (1'', 3") are monitored in mains connections (a, b) by means of a shunt (12''), and/or by means of a rotational speed evaluation of the electric motor (2),
- and during checking of the switches (1'', 3'') the electronic controller (4) is switched to fault if the detected rotational speed and/or the detected flow of current deviate from the predefined value.

6. Method according to one of Claims 1 to 5,
wherein a request for monitoring of the switches (1, 3) is issued if a power tool is connected to a mains network or during operation of a motor in a time of a respective half wave of a mains network in which the switches are not actuated.

7. Method according to one of Claims 1 to 6,
wherein a protective circuit is activated and a further switch (7) is actuated by the electronic controller (4) if both the first switch (1) and the second switch (3) are defective.

8. Method according to one of Claims 1 to 7,
**characterized in that** a plurality of switches are connected in series in a first or in a second mains connection (a, b) or in both mains connections (a, b).

9. Method according to one of Claims 1 to 8,
**characterized in that** a switch (10) is connected in parallel with an armature of the electric motor (2), and the switch (10) is monitored by means of a rotational speed detection device (11) and/or by means of a shunt (12).

10. Method according to one of Claims 1 to 9,
**characterized in that** the switches (1', 3') are additionally monitored by means of a shunt (12'), and the electronic controller (4) is switched to fault if a predefined maximum current is exceeded.

## Revendications

1. Procédé d'actionnement d'un moteur électrique (2) entraîné via le secteur électrique pour un outil électrique avec des commutateurs, notamment des commutateurs semi-conducteurs (1, 3), le fonctionnement des commutateurs relatifs à la sécurité de fonctionnement étant surveillé à l'aide d'un système électronique de commande (4) ;
un commutateur (1, 3) étant disposé dans chaque raccord de réseau (a, b) par rapport au moteur électrique ;
les commutateurs (1, 3) étant reliés au système électronique de commande (4) via les câbles de commande (20, 21) ;
au cours d'une première étape, le premier commutateur (1) étant connecté de façon conductrice et le deuxième commutateur (2) étant connecté de façon bloquée par le système électronique de commande (4), un paramètre de fonctionnement du moteur électrique (2) étant ensuite déterminé et comparé à une valeur prédéfinie, un dysfonctionnement des commutateurs (1, 3) étant détecté par le système électronique de commande (4) lorsque les paramètres de fonctionnement détectés s'écartent d'une valeur prédéfinie ;
**caractérisé en ce qu'**au cours d'une deuxième étape, le premier commutateur (1) est connecté de façon bloquée et le deuxième commutateur (3) est connecté de façon conductrice par le système électronique de commande (4), un paramètre de fonctionnement du moteur électrique (2) étant ensuite détecté et comparé à une valeur prédéfinie, un dysfonctionnement des commutateurs (1, 3) étant détecté par le système électronique de commande (4) lorsque le paramètre de fonctionnement détecté s'écarte d'une valeur prédéfinie ; et
chaque commutateur étant connecté en parallèle à un dispositif de contrôle de courant (5, 6) et les dispositifs de contrôle de courant (5, 6) étant reliés au système électronique de commande (4) pour la surveillance des commutateurs (1, 3) et pour la détection des paramètres de fonctionnement.

2. Procédé selon la revendication 1, le système électronique de commande (4) passant en mode de panne lorsqu'en cas de contrôle de surveillance des commutateurs (1, 3), le paramètre de fonctionnement détecté ne coïncide pas avec une valeur prédéfinie.

3. Procédé selon l'une quelconque des revendications 1 ou 2, respectivement une borne de contrôle (13) conduisant au système électronique de commande (4) en partant des bornes de moteur, au niveau des commutateurs (1', 3'), un paramètre de fonctionnement étant détecté via la borne de contrôle, notamment pendant un contrôle des commutateurs (1', 3') au cours duquel les commutateurs sont connectés de façon conductrice, le système électronique de commande (4) passant en mode de panne en présence d'une tension au niveau d'une des bornes de contrôle (13).

4. Procédé selon l'une quelconque des revendications 1 à 3, le paramètre de fonctionnement détecté étant une tension, une vitesse de rotation ou un débit de courant du système électronique de commande (4).

5. Procédé selon l'une quelconque des revendications 1 à 4, la surveillance des commutateurs (1'', 3'') dans les bornes de réseau (a, b) se produisant via un shunt (12'') et/ou via une analyse de vitesse de rotation du moteur électrique (2) ;
- et pendant un contrôle des commutateurs (1'', 3''), le système électronique de commande (4) passant en mode de panne lorsque la vitesse de rotation détectée et/ou le débit de courant détecté s'écarte de la valeur prédéfinie.

6. Procédé selon l'une quelconque des revendications 1 à 5, une demande de surveillance des commutateurs (1, 3) étant effectuée lorsqu'un outil électrique est placé au niveau d'un réseau ou pendant un fonctionnement du moteur pendant une durée respective de demi-onde d'un réseau pendant lequel les commutateurs ne sont pas commandés.

7. Procédé selon l'une quelconque des revendications 1 à 6, un circuit de protection étant activé et un commutateur (7) supplémentaire étant raccordé par le système électronique de commande (4) lorsque tant le premier commutateur (1) que le deuxième commutateur (3) sont défectueux.

8. Procédé selon l'une quelconque des revendications 1 à 7, **caractérisé en ce que** plusieurs commutateurs sont connectés en série dans une première ou une deuxième borne de réseau (a, b) ainsi que dans les deux bornes.

9. Procédé selon l'une quelconque des revendications 1 à 8, **caractérisé en ce qu'**un commutateur (10) est connecté parallèlement à une ancre du moteur électrique (2) et qu'une surveillance du commutateur (10) se produit via un dispositif de détection de vitesse de rotation (11) et/ou via un shunt (12).

10. Procédé selon l'une quelconque des revendications 1 à 9, **caractérisé en ce que** les commutateurs (1', 3') sont en outre surveillés via un shunt (12') et qu'en cas de dépassement d'un courant maximal prédéfini, le système électronique de commande (4) passe en mode de panne.
